# EUROPEAN PATENT APPLICATION

(11) **EP 4 818 247 A1**
(43) Date of publication of application: **07.10.2026**
(21) Application number: 24898029.4
(22) Date of filing: 22.11.2024
(51) Int. Cl.: C08L 23/08, C08J 5/18, B29C 55/12

(54) **POLYETHYLENE RESIN COMPOSITION FOR HIGH-TRANSPARENCY AND LOW-SHRINKAGE BIAXIALLY ORIENTED FILM, AND BIAXIALLY ORIENTED FILM COMPRISING SAME**

(30) Priority: 27.11.2023 KR 20230167230
(71) Applicant: Lotte Chemical Corporation, Seoul 05551 (KR)
(72) Inventor: OH, Sunhyung, Daejeon 34110 (KR); CHO, Jin ju, Daejeon 34110 (KR); CHOI, Byung Doo, Daejeon 34110 (KR); KIM, Yong Bin, Daejeon 34110 (KR)
(74) Representative: Germain Maureau
(86) International application number: PCT/KR2024/018636
(87) International publication number: WO 2025/116433

(57) **Abstract**

Disclosed is a polyethylene resin composition for a biaxially oriented film, which is moldable using a biaxial stretching machine, and exhibits excellent transparency and low shrinkage properties along with excellent stretching properties. The present invention provides a polyethylene resin composition for a biaxially oriented film, including (A) 1 to 40 wt% of a copolymer of ethylene and olefin having 4 to 10 carbon atoms, the copolymer having a density of 0.945 to 0.955 g/cm³, and (B) 60 to 99 wt% of a copolymer of ethylene and olefin having 4 to 10 carbon atoms, the copolymer having a density of 0.920 to 0.930 g/cm³, wherein total calorie obtained by differential scanning calorimeter (DSC) analysis is 150 to 170 J/g, molecular weight distribution (MWD, Mw/Mn) is 10 to 20, crystallinity of a sheet before machine direction (MD) stretching is 45 to 50%, and crystallinity after MD stretching is 80% or more.

## Description

### TECHNICAL FIELD

The present invention relates to a polyethylene resin composition and a film including the same, and more particularly, to a polyethylene resin composition for a biaxially oriented film and a film including the same.

This application claims the benefit of Korean Patent Application No. 10-2023-0167230, filed on 11/27/2023, in the Korean Intellectual Property Office, the disclosure of which is incorporated herein in its entirety by reference.

### BACKGROUND ART

In the plastic-related industry, a market environment is rapidly changing with the emergence of new issues, including marine plastic issues. Container packaging materials, which are used in large quantities, are no exception, and beyond packaging material production, processed food/beverage and distribution fields are also being required to respond to environmental issues such as plastic waste and greenhouse gas reduction.

In particular, packaging container-related companies recognize the need to focus on developing materials capable of reducing environmental burdens, and globally, the development and use of uni-material related products based on recycling and bio-plastics contributing to carbon dioxide (CO₂) reduction are expanding.

Globally, polyethylene (PE)-based materials are becoming a mainstream of a uni-materialization trend. This is because, in a multi-layer film design process, a sealant layer is examined first in consideration of contents and applications, and since a ratio of employing polyethylene for a middle sealant layer is relatively high, a surface material is also likely to become a polyethylene-based material when an entire product is made into a uni-material.

As recovery and recycling systems for polyethylene products in the United States are being established, the uni-material trend is projected to become mainstream. Accordingly, some companies are focusing on achieving polyethylene-based uni-materials with the goal of replacing nylon/polyethylene compositions, while other companies are seeking to transition pouch materials used for film applications with excessive functionality (such as dried fruit, frozen food, and pet food) from PET/PE systems to PE-oriented uni-material packaging.

Meanwhile, in biaxially oriented films, replacing layers typically used as BOPA (biaxially oriented polyamide) or BOPET (biaxially oriented polyethylene terephthalate) with BOPE (biaxially oriented polyethylene) to implement uni-materials may align with such development trends, but cases demonstrating satisfactory transparency and low shrinkage properties along with stretching properties as polyethylene that is moldable using a biaxial stretching machine and usable as a first-grade paper (printing surface) for easy recycling have not yet been presented.

Korean Patent Registration No. 0746253 discloses a polyethylene-based stretched film capable of uniform stretching and exhibiting excellent Elmendorf tear strength. However, it is difficult to obtain satisfactory transparency and low shrinkage properties when performing biaxial stretching with the actual composition presented.

### DISCLOSURE OF THE INVENTION

### TECHNICAL PROBLEM

An aspect of the present invention provides a polyethylene resin composition for a biaxially oriented film, which is moldable using a biaxial stretching machine and exhibits excellent transparency and low shrinkage properties along with excellent stretching properties, and a biaxially oriented film including the same.

### TECHNICAL SOLUTION

According to an aspect of the present invention, there is provided a polyethylene resin composition for a biaxially oriented film, including (A) 1 to 40 wt% of a copolymer of ethylene and olefin having 4 to 10 carbon atoms, the copolymer having a density of 0.945 to 0.955 g/cm³, and (B) 60 to 99 wt% of a copolymer of ethylene and olefin having 4 to 10 carbon atoms, the copolymer having a density of 0.920 to 0.930 g/cm³, wherein total calorie obtained by differential scanning calorimeter (DSC) analysis is 150 to 170 J/g, molecular weight distribution (MWD, Mw/Mn) is 10 to 20, crystallinity of a sheet before machine direction (MD) stretching is 45 to 50%, and crystallinity after MD stretching is 80% or more as measured according to a method below.

### [Measurement method]

A sheet is prepared using a multi-layer film molding machine with respect to the resin composition under conditions of a cooling roll temperature of 35 to 45°C, an extruder temperature of 240°C, and a line speed of 1.2 m/min, and the sheet is stretched 5 times using an MD stretching unit under conditions of a preheating temperature of 118°C, a stretching temperature of 116°C, and a line speed of 1.2 m/min, and then crystallinity is measured for each of the sheet before and after MD stretching, wherein the crystallinity is measured according to Equation 1 below for peaks having a full width at half maximum (FWHM) of less than 1.0, generated by X-ray diffraction (XRD) analysis; <Equation 1> 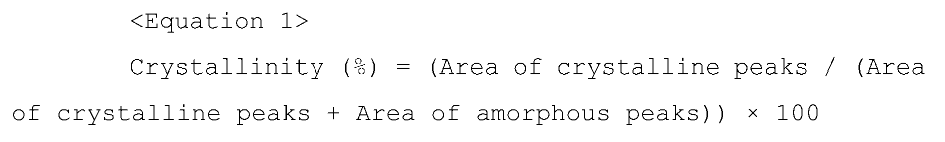 Crystallinity (%) = (Area of crystalline peaks / (Area of crystalline peaks + Area of amorphous peaks)) × 100

According to an embodiment of the present invention, the copolymer (A) has a melt index (190°C, 2.16-kg load) of 0.6 to 1.2 g/10 min, and the copolymer (B) has a melt index (190°C, 2.16-kg load) of 1.2 to 2.5 g/10 min.

According to another embodiment of the present invention, the resin composition has a melt index (190°C, 2.16-kg load) of 1 to 2 g/10 min and a density of 0.930 to 0.940 g/cm³.

According to another aspect of the present invention, there is provided a biaxially oriented film including the resin composition described above.

According to an embodiment of the present invention, the film has a shrinkage rate of less than 5% in each of a machine direction and a transverse direction, a tensile strength of 700 kgf/cm³ or more and 1,800 kgf/cm² or more in each of the machine direction and the transverse direction, and a haze of 5% or less, as determined according to a measurement method below.

### [Measurement method]

A biaxially stretched film is prepared with respect to a film having a thickness of 30 µm prepared from the resin composition under conditions of a film width of 8 m, a molding speed of 200 m/min, a machine direction stretching ratio of 5 times (a preheating temperature of 114 to 118°C, a stretching temperature of 115°C, and an annealing temperature of 110 to 115°C), and a transverse direction stretching ratio of 9 times (a preheating temperature of 125 to 137°C, a stretching temperature of 125 to 128°C, and an annealing temperature of 130 to 133°C)), and a biaxially stretched film specimen (10 x 10 cm) is measured for shrinkage rate by determining a reduced length in the machine direction and the transverse direction after 5 minutes in a convection oven at 100°C, the specimen is measured for tensile strength using a tensile tester (model: Instron4466) under conditions of a load cell of 100 N and a test speed of 500 mm/min according to ASTM D882, and the specimen is measured for haze using a haze meter (model: NDH5000) according to ASTM D1003.

### ADVANTAGEOUS EFFECTS

According to the present invention, a polyethylene resin composition for a biaxially oriented film, which is moldable using a biaxial stretching machine and exhibits excellent transparency and low shrinkage properties along with excellent stretching properties, as a polyethylene resin composition having a specific level of total calorie, molecular weight distribution, and crystallinity, where a copolymer of ethylene and olefin having 4 to 10 carbon atoms with different densities within a certain range is mixed, and a biaxially oriented film including the same may be provided.

### MODE FOR CARRYING OUT THE INVENTION

Hereinafter, the present invention will be described in detail through preferred embodiments. Before getting to the point, it will be understood that words or terms used in the specification and claims of the present invention shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention. Thus, configurations of embodiments described herein are simply the most preferable embodiments of the present invention and are not representative of all the technical spirits of the invention, and thus it should be understood that there may exist various equivalents and modified examples as substitutes at the time when the present invention is filed.

In a condition where a composition exhibiting excellent transparency and low shrinkage properties along with excellent stretching properties has not yet been presented for replacing layers typically used as BOPA or BOPET with BOPE to implement uni-materials, the present inventors found that a polyethylene resin composition having a specific level of total calorie, molecular weight distribution, and crystallinity, where a copolymer of ethylene and olefin having 4 to 10 carbon atoms with different densities within a certain range is mixed is moldable using a biaxial stretching machine and exhibits improved transparency and low shrinkage properties along with excellent stretching properties, thereby leading to the present invention.

Accordingly, the present invention discloses a polyethylene resin composition for a biaxially oriented film, including (A) 1 to 40 wt% of a copolymer of ethylene and olefin having 4 to 10 carbon atoms, the copolymer having a density of 0.945 to 0.955 g/cm³, and (B) 60 to 99 wt% of a copolymer of ethylene and olefin having 4 to 10 carbon atoms, the copolymer having a density of 0.920 to 0.930 g/cm³, where total calorie obtained by differential scanning calorimeter (DSC) analysis is 150 to 170 J/g, molecular weight distribution (MWD, Mw/Mn) is 10 to 20, crystallinity of a sheet before machine direction (MD) stretching is 45 to 50%, and crystallinity after MD stretching is 80% or more as measured according to a method below.

### [Measurement method]

A sheet is prepared using a multi-layer film molding machine with respect to the resin composition under conditions of a cooling roll temperature of 35 to 45°C, an extruder temperature of 240°C, and a line speed of 1.2 m/min, and the sheet is stretched 5 times using a machine direction (MD) unit under conditions of a preheating temperature of 118°C, a stretching temperature of 116°C, and a line speed of 1.2 m/min, and then crystallinity is measured for each of the sheet before and after MD stretching, wherein the crystallinity is measured according to Equation 1 below for peaks having a full width at half maximum (FWHM) of less than 1.0, generated by X-ray diffraction (XRD) analysis; <Equation 1> 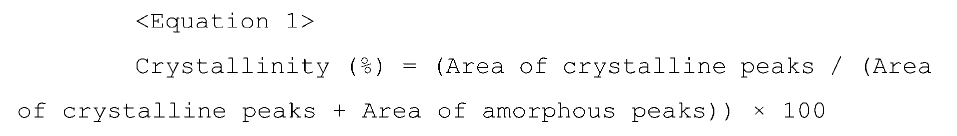 Crystallinity (%) = (Area of crystalline peaks / (Area of crystalline peaks + Area of amorphous peaks)) × 100

In the present invention, the copolymer (A) is a high-density polyethylene, and may have a density of 0.945 to 0.955 g/cm³, and preferably 0.948 to 0.952 g/cm³. When the density is out of the range, biaxial stretching molding is not achievable.

Furthermore, as the copolymer (A), a copolymer of ethylene and α-olefin such as propylene, 1-butene, 1-hexene, or 1-octene may be used, and preferably, a copolymer of ethylene and 1-butene may be used, and the copolymer may have a melt index (190°C, 2.16-kg load) of 0.6 to 1.2 g/10 min, and preferably 0.8 to 1.2 g/10 min. When a copolymer prepared using an α-olefin other than 1-butene as a comonomer copolymerized with ethylene is applied, or when the melt index is out of the range, there may be limitations in improving low shrinkage properties, or biaxial stretching molding may not be achievable. The polymerization method of the copolymer (A) is not particularly limited, and the copolymer (A) may be prepared through any method such as a gas phase method, a solution method, or a slurry method.

The copolymer (A) may be included in an amount of 1 to 40 wt% with respect to a total resin composition, and preferably may be included in an amount of 15 to 35 wt%. When the amount of the copolymer (A) is out of the range, transparency and low shrinkage properties may not be improved, or surface properties may be reduced during sheet molding.

In the present invention, the copolymer (B) is a low-density polyethylene, and may have a density of 0.920 to 0.930 g/cm³., and preferably 0.925 to 0.930 g/cm³. When the density is out of the range, biaxial stretching molding is not achievable.

As the copolymer (B), a copolymer of ethylene and α-olefin such as propylene, 1-butene, 1-hexene, or 1-octene may be used, and preferably, a copolymer of ethylene and 1-butene or 1-octene may be used, and the copolymer may have a melt index (190°C, 2.16-kg load) of 1.2 to 2.5 g/10 min, and preferably 1.5 to 2 g/10 min. When a copolymer prepared using an α-olefin other than 1-butene and 1-octene as a comonomer copolymerized with ethylene is applied, or when the melt index is out of the range, there may be limitations in improving low shrinkage properties, or biaxial stretching molding may not be achievable. The polymerization method of the copolymer (B) is not particularly limited, and the copolymer (B) may be prepared through any method such as a gas phase method, a solution method, or a slurry method.

The copolymer (B) may be included in an amount of 60 to 99 wt% with respect to a total resin composition, and preferably may be included in an amount of 65 to 85 wt%. When the amount of the copolymer (B) is out of the range, transparency and low shrinkage properties may not be improved, or surface properties may be reduced during sheet molding.

According to the mixing of the copolymer (A) and the copolymer (B) as described above, a final resin composition may have a melt index (190°C, 2.16-kg load) of 1 to 2 g/10 min, and preferably 1.3 to 1.7 g/10 min, and may have a density of 0.930 to 0.940 g/cm³, and preferably 0.934 to 0.938 g/cm³.

In the present invention, it is confirmed that transparency and low shrinkage properties may be improved along with excellent stretching properties by adjusting thermal properties, molecular weight properties, and crystallinity of a resin composition. Specifically, when total calorie obtained by differential scanning calorimeter (DSC) analysis is adjusted to 150 to 170 J/g, preferably 155 to 165 J/g, molecular weight distribution (MWD, Mw/Mn) is adjusted to 10 to 20, preferably 10 to 15, crystallinity of a sheet before machine direction (MD) stretching is adjusted to 45 to 50%, preferably 45 to 48%, and crystallinity after MD stretching is adjusted to 80% or more, preferably 80 to 90% as measured according to a method below, improved transparency and low shrinkage properties along with excellent stretching properties are achieved.

### [Measurement method]

A sheet is prepared using a multi-layer film molding machine with respect to the resin composition under conditions of a cooling roll temperature of 35 to 45°C, an extruder temperature of 240°C, and a line speed of 1.2 m/min, and the sheet is stretched 5 times using a machine direction (MD) unit under conditions of a preheating temperature of 118°C, a stretching temperature of 116°C, and a line speed of 1.2 m/min, and then crystallinity is measured for each of the sheet before and after MD stretching, wherein the crystallinity is measured according to Equation 1 below for peaks having a full width at half maximum (FWHM) of less than 1.0, generated by X-ray diffraction (XRD) analysis; <Equation 1> 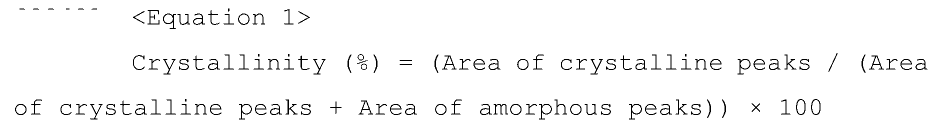 Crystallinity (%) = (Area of crystalline peaks / (Area of crystalline peaks + Area of amorphous peaks)) × 100

In this case, considering the required molecular weight distribution of the resin composition, it is desirable that the molecular weight distributions (MWD, Mw/Mn) of the copolymer (A) and the molecular weight distributions (MWD, Mw/Mn) of the copolymer (B) to be mixed are preferably 15 to 20 and 2 to 6, respectively.

In the polyethylene resin composition for a biaxially oriented film according to the present invention, general polyethylene additives may be added for application in various uses. For example, antioxidants, heat and light stabilizers, antistatic agents, lubricants, anti-blocking agents, preservatives, processing aids, slip agents, anti-adhesive agents, pigments, flame retardants, foaming agents, and the like may be added in an appropriate amount and used.

The polyethylene resin composition for a biaxially oriented film according to the present invention may be prepared by mixing and extruding the components according to typical methods known in the art. For example, the components may be fed into a twin-screw extruder and melt-kneaded to prepare a polyethylene resin composition for a biaxially oriented film.

The polyethylene resin composition for a biaxially oriented film according to the present invention as described above is moldable using a biaxial stretching machine and exhibits improved transparency and low shrinkage properties along with excellent stretching properties. Specifically, the biaxially oriented film prepared from the polyethylene resin composition for a biaxially oriented film according to the present invention may have a shrinkage rate of less than 5%, preferably less than 3%, in each of the machine direction and the transverse direction, a tensile strength of 700 kgf/cm² or more and 1,800 kgf/cm² or more, preferably 750 kgf/cm² or more and 2,000 kgf/cm² or more in each of the machine direction and the transverse direction, and a haze of 5% or less, preferably 2% or less.

### [Measurement method]

A biaxially stretched film having a thickness of 30 µm is prepared with respect to a sheet molded with the resin composition under conditions of a film width of 8 m, a molding speed of 200 m/min, a machine direction stretching ratio of 5 times (a preheating temperature of 114 to 118°C, a stretching temperature of 115°C, and an annealing temperature of 110 to 115°C), and a transverse direction stretching ratio of 9 times (a preheating temperature of 125 to 137°C, a stretching temperature of 125 to 128°C, and an annealing temperature of 130 to 133°C)), and a biaxially stretched film specimen (10 x 10 cm) is measured for shrinkage rate by determining a reduced length in the machine direction and the transverse direction after 5 minutes in a convection oven at 100°C, the specimen is measured for tensile strength using a tensile tester (model: Instron4466) under conditions of a load cell of 100 N and a test speed of 500 mm/min according to ASTM D882, and the specimen is measured for haze using a haze meter (model: NDH5000) according to ASTM D1003.

Hereinafter, the present invention will be described in more detail through specific Examples and Comparative Examples.

### Examples and Comparative Examples

Copolymers having physical properties shown in Table 1 below were fed into a twin-screw extruder alone or in a mixture, and melt-kneaded under conditions of 180 to 220°C to prepare a pellet-type polyethylene resin composition having physical properties shown in Table 1. Measurement methods for prepared polyethylene resin compositions are described below. Subsequently, the prepared polyethylene resin compositions were prepared into biaxially oriented films through following steps.

Sheet molding → machine direction (MD) stretching → transverse direction (TD) stretching → biaxially oriented film.

Measurement methods for each step up to the preparation into the biaxially oriented films were performed as follows, and the results are shown in Table 1 below.

### [Method for measuring polyethylene resin composition (pellet)]

### (1) Density

Density was measured in accordance with ASTM D1505.

### (2) Melt Index (MI)

In according with ASTM D1238, melt index was measured under a load of 2.16 kg at 190°C.

### (3) Thermal properties

10 mg of a specimen was pre-melted at 220°C for 5 minutes in a nitrogen gas atmosphere using a differential scanning calorimeter (DSC, TA Instruments), and then the temperature was dropped to 40°C at a cooling rate of 10°C/min. Thereafter, the temperature was raised at a heating rate of 10°C/min, and a peak temperature of a maximum peak of an obtained melting endothermic curve was defined as a melting point (Tm). In addition, a crystallization temperature (Tc) was measured while a sample was heated to 200°C at a heating rate of 10°C/min and then cooled to -50°C at a rate of - 10°C/min. In this case, total calorie was calculated as an area of a melting point peak (Tm peak) according to temperature in a DSC curve.

### (4) Molecular weight properties

Molecular weight properties was measured through GPC analysis method in accordance with ASTM D3536.

### [Evaluation of sheet and Measurement method for crystallinity]

A sheet was prepared using a multi-layer film molding machine with respect to the resin composition under conditions of a cooling roll temperature of 35 to 45°C, an extruder temperature of 240°C, and a line speed of 1.2 m/min, and was stretched 5 times using an MD stretching unit under conditions of a preheating temperature of 118°C, a stretching temperature of 116°C, and a line speed of 1.2 m/min. In this case, extruder pressure was measured during sheet molding, and the presence of irregularities and patterns were checked. In addition, crystallinity was measured for each sheet before and after MD stretching, and for peaks having full width at half maximum (FWHM) of less than 1.0, generated by X-ray diffraction (XRD) analysis, crystallinity was measured according to Equation 1 below. <Equation 1> 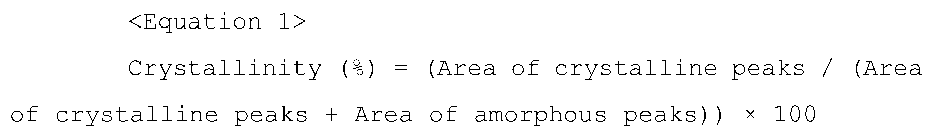 Crystallinity (%) = (Area of crystalline peaks / (Area of crystalline peaks + Area of amorphous peaks)) × 100

### [Method for measuring film properties]

A biaxially stretched film was prepared with respect to a film having a thickness of 30 µm prepared from the resin composition under conditions of a film width of 8 m, a molding speed of 200 m/min, a machine direction (MD) stretching ratio of 5 times (a preheating temperature of 114 to 118°C, a stretching temperature of 115°C, and an annealing temperature of 110 to 115°C), and a transverse direction (TD) stretching ratio of 9 times (a preheating temperature of 125 to 137°C, a stretching temperature of 125 to 128°C, and an annealing temperature of 130 to 133°C)), and in this case, presence of patterns on film was additionally checked before input into tenter frame after MD stretching, and a biaxially stretched film specimen (10 x 10 cm) was measured for shrinkage rate by determining a reduced length in the machine direction and the transverse direction after 5 minutes in a convection oven at 100°C, the specimen was measured for tensile strength using a tensile tester (model: Instron4466) under conditions of a load cell of 100 N and a test speed of 500 mm/min according to ASTM D882, and the specimen was measured for haze using a haze meter (model: NDH5000) according to ASTM D1003.

**[Table 1]**

| Item | | | Comparative Example 1 | Comparative Example 2 | Comparative Example 3 | Example | Comparative Example 4 | Comparative Example 5 | Comparative Example 6 |
|---|---|---|---|---|---|---|---|---|---|
| Element | FB420L (Copolymer B) | | 100 | 90 | 80 | 70 | 60 | - | 70 |
| | FB420H (Copolymer A) | | - | 10 | 20 | 30 | 40 | 100 | - |
| | UF420H (Copolymer A) | | - | - | - | - | - | - | 30 |
| Properties of polyethylene resin composition (pellet) | MI (g/10 min) | | 1.8 | 1.7 | 1.6 | 1.5 | 1.4 | 1.1 | 1.5 |
| | Density (g/cm³) | | 0.928 | 0.930 | 0.933 | 0.936 | 0.939 | 0.950 | 0.937 |
| | MWD (Mw/Mn) | | 3.94 | 6.48 | 9.27 | 12.5 | 13.7 | 17.7 | 7.89 |
| | DSC Total Calories (J/g) | | 140 | 143 | 152 | 161 | 172 | 185 | 162 |
| Sheet evaluation and physical properties | Extruder pressure (bar) | | 164 | 161 | 158 | 157 | 155 | 154 | 166 |
| | Sheet moldability | | Good | Good | Good | Good | Good | Irregula rities observed | Good |
| | Pattern occurrence | | Observed | Observed | Observed | Not observed | Not observed | N/A | Not observed |
| | XRD crystallinity (%) | | 45 | 45 | 47 | 46 | 48 | 50 | 47 |
| Physical properties after MD stretching | XRD crystallinity (%) | | 56 | 76 | 76 | 81 | 85 | - | 82 |
| Film physical properties | Haze (%) | | 4.9 | 4.0 | 2.3 | 1.5 | 5.0 | - | 4.5 |
| | Tensile strength (kgf/cm²) | MD | 530 | 600 | 650 | 770 | 807 | - | 700 |
| | | TD | 1,337 | 1,700 | 2,000 | 2,650 | 2,500 | - | 1,700 |
| | Shrinkage rate (%) | MD | 5.7 | 5.3 | 5.0 | 2.3 | 2.3 | - | 4.5 |
| | | TD | 2.0 | 3.8 | 3.0 | 2.5 | 4.0 | - | 5.0 |
| * Note | | | | | | | | | |
| - FB420L : MI 1.8 g/10 min / Density 0.928 / Tm 126°C, Tc 113°C, Total Calories 142 J/g / MWD | | | | | | | | | |
| 3.94 | | | | | | | | | |
| - FB420H : MI 1.1 g/10 min / Density 0.950 / Tm 129°C, Tc 116°C, Total Calories 186 J/g / MWD 17.7 | | | | | | | | | |
| - UF420H : MI 1.1 g/10 min / Density 0.950 / Tm 129°C, Tc 116°C, Total Calories 186 J/g / MWD 6.57 | | | | | | | | | |

Referring to Table 1, it is confirmed that the biaxially oriented film (Example) prepared from the polyethylene resin composition having a specific level of total calorie, molecular weight distribution, and crystallinity, where a copolymer of ethylene and olefin having 4 to 10 carbon atoms with different densities within a certain range is mixed, exhibits excellent transparency and low shrinkage properties along with excellent stretching properties.

Regarding this, it is seen that when the copolymer (B) is used alone or the content of the copolymer (A) does not reach a certain level (Comparative Examples 1 to 3), the molecular weight distribution is relatively narrow and the DSC total calorie is low, resulting in low crystallinity after MD stretching, which causes patterns to form and shrinkage properties to be reduced.

In addition, it is seen that when the copolymer (A) is used alone (Comparative Example 5), irregularities occur during sheet molding, which leads to breakage due to nonuniform stretching during MD stretching, making stretching infeasible, and when the content of the copolymer (B) does not reach a certain level (Comparative Example 4), the DSC total calorie is high, which leads to a decrease in transparency.

In addition, it is seen that when a copolymer having a narrow molecular weight distribution is used as the copolymer (A) (Comparative Example 6), the molecular weight distribution of a final resin composition becomes narrow, which leads to a decline in sheet moldability, tensile strength, and shrinkage properties.

The preferred embodiments of the present invention have been described. The description of the present invention has been presented for purposes of illustration, and it will be understood by those skilled in the art that other specific modifications may be easily made without changing the technical idea or essential features thereof.

Therefore, the scope of the present invention is represented by the following claims rather than the above detailed description, and all changes and changed forms derived from the meaning, scope, and equivalent concepts of the claims should be construed as being included in the scope of the present invention.

## Claims

1. A polyethylene resin composition for a biaxially oriented film, comprising:
(A) 1 to 40 wt% of a copolymer of ethylene and olefin having 4 to 10 carbon atoms, the copolymer having a density of 0.945 to 0.955 g/cm³; and
(B) 60 to 99 wt% of a copolymer of ethylene and olefin having 4 to 10 carbon atoms, the copolymer having a density of 0.920 to 0.930 g/cm³,
wherein total calorie obtained by differential scanning calorimeter (DSC) analysis is 150 to 170 J/g, molecular weight distribution (MWD, Mw/Mn) is 10 to 20, crystallinity of a sheet before machine direction (MD) stretching is 45 to 50%, and crystallinity after MD stretching is 80% or more as measured according to a method below:
[measurement method]
a sheet is prepared using a multi-layer film molding machine with respect to the resin composition under conditions of a cooling roll temperature of 35 to 45°C, an extruder temperature of 240°C, and a line speed of 1.2 m/min, and the sheet is stretched 5 times using an MD stretching unit under conditions of a preheating temperature of 118°C, a stretching temperature of 116°C, and a line speed of 1.2 m/min, and then crystallinity is measured for each of the sheet before and after MD stretching, wherein the crystallinity is measured according to Equation 1 below for peaks having a full width at half maximum (FWHM) of less than 1.0, generated by X-ray diffraction (XRD) analysis; <Equation 1> 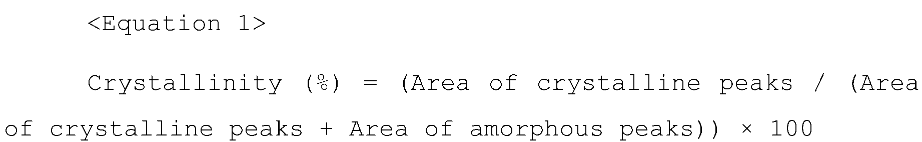 Crystallinity (%) = (Area of crystalline peaks / (Area of crystalline peaks + Area of amorphous peaks)) × 100

2. The polyethylene resin composition for a biaxially oriented film of claim 1, wherein the copolymer (A) has a melt index (190°C, 2.16-kg load) of 0.6 to 1.2 g/10 min, and the copolymer (B) has a melt index (190°C, 2.16-kg load) of 1.2 to 2.5 g/10 min.

3. The polyethylene resin composition for a biaxially oriented film of claim 1, wherein the resin composition has a melt index (190°C, 2.16-kg load) of 1 to 2 g/10 min and a density of 0.930 to 0.940 g/cm³.

4. A biaxially oriented film comprising the resin composition according to any one of claims 1 to 3.

5. The biaxially oriented film of claim 4, wherein the film has a shrinkage rate of less than 5% in each of a machine direction (MD) and a transverse direction (TD), a tensile strength of 700 kgf/cm² or more and 1,800 kgf/cm² or more in each of the machine direction and the transverse direction, and a haze of 5% or less, as determined according to a measurement method below:
[measurement method]
a biaxially stretched film having a thickness of 30 µm is prepared with respect to a sheet molded with the resin composition under conditions of a film width of 8 m, a molding speed of 200 m/min, a machine direction stretching ratio of 5 times (a preheating temperature of 114 to 118°C, a stretching temperature of 115°C, and an annealing temperature of 110 to 115°C), and a transverse direction stretching ratio of 9 times (a preheating temperature of 125 to 137°C, a stretching temperature of 125 to 128°C, and an annealing temperature of 130 to 133°C)), and a biaxially stretched film specimen (10 x 10 cm) is measured for shrinkage rate by determining a reduced length in the machine direction and the transverse direction after 5 minutes in a convection oven at 100°C, the specimen is measured for tensile strength using a tensile tester (model: Instron4466) under conditions of a load cell of 100 N and a test speed of 500 mm/min according to ASTM D882, and the specimen is measured for haze using a haze meter (model: NDH5000) according to ASTM D1003.
